(19) **Europäisches Patentamt / European Patent Office / Office européen des brevets**

(11) **EP 4 232 948 B1**

(12) **FASCICULE DE BREVET EUROPEEN**

(45) Date de publication et mention de la délivrance du brevet:
**25.06.2025 Bulletin 2025/26**

(21) Numéro de dépôt: **21807187.6**

(22) Date de dépôt: **19.10.2021**

(51) Classification Internationale des Brevets (IPC):
**G06V 20/69** *(2022.01)*  **G06V 20/00** *(2022.01)*

(52) Classification Coopérative des Brevets (CPC):
**G06V 20/69; G06F 18/24133**

(86) Numéro de dépôt international:
**PCT/FR2021/051821**

(87) Numéro de publication internationale:
**WO 2022/084620 (28.04.2022 Gazette 2022/17)**

(54) **PROCÉDÉ DE CLASSIFICATION D'UNE IMAGE D'ENTRÉE REPRÉSENTANT UNE PARTICULE DANS UN ÉCHANTILLON**

VERFAHREN ZUR KLASSIFIZIERUNG EINES EINGABEBILDES ZUR DARSTELLUNG EINES PARTIKELS IN EINER PROBE

METHOD FOR CLASSIFYING AN INPUT IMAGE REPRESENTING A PARTICLE IN A SAMPLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.10.2020 FR 2010743**

(43) Date de publication de la demande:
**30.08.2023 Bulletin 2023/35**

(73) Titulaires:
• **BIOMERIEUX**
  **69280 Marcy-L'Etoile (FR)**
• **Bioaster**
  **69007 Lyon (FR)**

(72) Inventeurs:
• **MAHÉ, Pierre**
  **38250 Lans en Vercors (FR)**
• **EL AZAMI, Meriem**
  **69210 L Arbresle (FR)**
• **DEGOUT-CHARMETTE, Elodie**
  **01600 Toussieux (FR)**
• **SEDAGHAT, Zohreh**
  **69350 La Mulatiere (FR)**
• **JOSSO, Quentin**
  **69003 Lyon (FR)**
• **ROL, Fabian**
  **38290 La Verpilliere (FR)**

(74) Mandataire: **Regimbeau**
**20, rue de Chazelles**
**75847 Paris Cedex 17 (FR)**

(56) Documents cités:
• HUI YU ET AL: "Phenotypic Antimicrobial Susceptibility Testing with Deep Learning Video Microscopy", ANALYTICAL CHEMISTRY, vol. 90, no. 10, 20 April 2018 (2018-04-20), US, pages 6314 - 6322, XP055663145, ISSN: 0003-2700, DOI: 10.1021/acs.analchem.8b01128
• BLIZNUKS D ET AL: "Embedded neural network system for microorganisms growth analysis", PROGRESS IN BIOMEDICAL OPTICS AND IMAGING, SPIE - INTERNATIONAL SOCIETY FOR OPTICAL ENGINEERING, BELLINGHAM, WA, US, vol. 11457, 9 April 2020 (2020-04-09), pages 1145720 - 1145720, XP060130569, ISSN: 1605-7422, ISBN: 978-1-5106-0027-0, DOI: 10.1117/12.2564404

**(Cont. page suivante)**

- HAY EDOUARD A. ET AL: "Performance of convolutional neural networks for identification of bacteria in 3D microscopy datasets", vol. 14, no. 12, 3 December 2018 (2018-12-03), XP055812639, Retrieved from the Internet <URL:https://storage.googleapis.com/plos-corpus-prod/10.1371/journal.pcbi.1006628/2/pcbi.1006628.pdf? X-Goog-Algorithm=GOOG4-RSA-SHA256& X-Goog-Credential=wombat-sa@plos-prod.iam.gserviceaccount.com/20210610/auto/storage/goog4_request& X-Goog-Date=20210610T120440Z& X-Goog-Expires=86400& X-Goog-SignedHeaders=h> DOI: 10.1371/journal.pcbi.1006628
- ZHONG ZILONG ET AL: "Deep residual networks for hyperspectral image classification", 2017 IEEE INTERNATIONAL GEOSCIENCE AND REMOTE SENSING SYMPOSIUM (IGARSS), IEEE, 23 July 2017 (2017-07-23), pages 1824 - 1827, XP033274796, DOI: 10.1109/IGARSS.2017.8127330
- ANONYMOUS: "t-distributed stochastic neighbor embedding - Wikipedia", 24 September 2020 (2020-09-24), XP055812650, Retrieved from the Internet <URL:https://en.wikipedia.org/w/index.php? title=T-distributed_stochastic_neighbor_embedding&oldid=980150639> [retrieved on 20210610]
- ANONYMOUS: "k-nearest neighbors algorithm - Wikipedia", 11 October 2020 (2020-10-11), XP055816233, Retrieved from the Internet <URL:https://en.wikipedia.org/w/index.php? title=K-nearest_neighbors_algorithm&oldid=982934962> [retrieved on 20210621]
- SCHUBERT ERICH ET AL: "Intrinsic t-Stochastic Neighbor Embedding for Visualization and Outlier Detection", 28 September 2017, ADVANCES IN BIOMETRICS : INTERNATIONAL CONFERENCE, ICB 2007, SEOUL, KOREA, AUGUST 27 - 29, 2007 ; PROCEEDINGS; [LECTURE NOTES IN COMPUTER SCIENCE; LECT.NOTES COMPUTER], SPRINGER, BERLIN, HEIDELBERG, PAGE(S) 188 - 203, ISBN: 978-3-540-74549-5, XP047449115

**Description**

DOMAINE TECHNIQUE GENERAL

La présente invention concerne le domaine de l'acquisition optique de particules biologiques. Les particules biologiques peuvent être des microorganismes tels que des bactéries, des champignons ou des levures par exemple. Il peut également s'agir de cellules, organismes multicellulaires, ou toute autre particule de type particule polluante, poussière.

L'invention trouve une application particulièrement avantageuse pour analyser l'état d'une particule biologique, par exemple pour savoir l'état métabolique d'une bactérie suite à l'application d'un antibiotique. L'invention permet, par exemple, de réaliser un antibiogramme d'une bactérie.

ETAT DE L'ART

Un antibiogramme est une technique de laboratoire visant à tester le phénotype d'une souche bactérienne vis-à-vis d'un ou plusieurs antibiotiques. Un antibiogramme est classiquement réalisé par culture d'un échantillon contenant des bactéries et un antibiotique.

La demande de brevet européen N° 2 603 601 décrit une méthode pour réaliser un antibiogramme en visualisant l'état des bactéries après une durée d'incubation en présence d'un antibiotique. Pour visualiser les bactéries, les bactéries sont marquées par des marqueurs fluorescents permettant de révéler leurs structures. La mesure de la fluorescence des marqueurs permet alors de déterminer si l'antibiotique a agi efficacement sur les bactéries.

Le processus classique pour déterminer les antibiotiques efficaces sur une souche bactérienne consiste à réaliser un prélèvement contenant ladite souche (e.g. sur un patient, un animal, un lot alimentaire, etc.) puis à transmettre le prélèvement à un centre d'analyse. Lorsque le centre d'analyse réceptionne le prélèvement, il procède tout d'abord à la culture de la souche bactérienne pour obtenir au moins une colonie de celle-ci, culture comprise entre 24 heures et 72 heures. Il prépare ensuite à partir de cette colonie plusieurs échantillons comprenant des antibiotiques différents et/ou des concentrations d'antibiotiques différentes, puis met à nouveau les échantillons à incuber. Après une nouvelle durée de culture comprise également entre 24 et 72 heures, chaque échantillon est analysé manuellement pour déterminer si l'antibiotique a agi efficacement. Les résultats sont alors retransmis au praticien pour appliquer l'antibiotique et/ou la concentration d'antibiotique le plus efficace.

Cependant, le processus de marquage est particulièrement long et complexe à réaliser et ces marqueurs chimiques ont un effet cytotoxique sur les bactéries. Il s'ensuit que ce mode de visualisation ne permet pas d'observer les bactéries à plusieurs instants de la culture des bactéries, d'où la nécessité d'utiliser un temps de culture suffisamment long, de l'ordre de 24 à 72 heures, pour garantir la fiabilité de la mesure. D'autres méthodes de visualisation de particules biologiques utilisent un microscope, permettant une mesure non destructive d'un échantillon.

La microscopie holographique numérique ou DHM (Digital Holographie Microscopy) est une technique d'imagerie permettant de s'affranchir des contraintes de profondeur de champ de la microscopie optique classique. Schématiquement, elle consiste à enregistrer un hologramme formé par l'interférence entre les ondes lumineuses diffractées par l'objet observé et une onde de référence présentant une cohérence spatiale. Cette technique est décrite dans l'article de revue de Myung K.Kim intitulé « Principles and techniques of digital holographie microscopy » publié dans SPIE Reviews Vol. 1, N°I, Janvier 2010.

Récemment, il a été proposé d'utiliser la microscopie holographique numérique pour identifier des micro-organismes de manière automatisée. Ainsi, la demande internationale WO2017/207184 décrit une méthode d'acquisition d'une particule intégrant une simple acquisition sans focalisation associée à une reconstruction numérique de la focalisation, permettant d'observer une particule biologique en limitant le temps d'acquisition.

Typiquement, cette solution permet de détecter les modifications structurelles d'une bactérie en présence d'un antibiotique après une incubation de seulement une dizaine de minute, et sa sensibilité au bout de deux heures (détection de la présence ou de l'absence d'une division ou d'un motif codant la division) contrairement au processus classique précédemment décrit qui peut prendre plusieurs jours. En effet, les mesures étant non destructives, il est possible de réaliser des analyses très tôt dans le processus de culture sans risquer de détruire l'échantillon et donc de prolonger le temps d'analyse.

Il même est possible de suivre une particule sur plusieurs images successives de sorte à former un film représentant l'évolution d'une particule au cours du temps (puisque les particules ne sont pas altérées après la première analyse) afin de visualiser son comportement, par exemple sa vitesse de déplacement ou son processus de division cellulaire.

On comprend donc que le procédé de visualisation donne d'excellents résultats. La difficulté tient dans l'interprétation en elle-même de ces images ou ce film si l'on souhaite par exemple conclure sur la susceptibilité d'une bactérie à l'antibiotique présent dans l'échantillon.

Diverses techniques ont été proposées allant du simple comptage de bactéries au cours du temps à l'analyse dit morphologique visant à détecter par analyse d'image des « configurations » particulières. Par exemple, lorsqu'une bactérie se prépare à la division, il apparait deux pôles dans la distribution, bien avant la division elle-même qui se traduit par deux portions distinctes de la distribution.

Il a été proposé dans l'article [Choi et al. 2014] de combiner les deux techniques pour évaluer un effet antibiotique. Cependant, comme souligné par les auteurs, leur approche nécessite une calibration très fine d'un certain nombre de seuils qui dépendent fortement de la nature des changements morphologiques provoqués par les antibiotiques.

Plus récemment, l'article [Yu et al. 2018] décrit une approche basée sur l'apprentissage profond (deep learning). Les auteurs proposent d'extraire les caractéristiques morphologiques ainsi que des caractéristiques liées au mouvement des bactéries au moyen d'un réseau de neurones à convolution (Convolutional Neural Network, CNN). Cette solution s'avère cependant d'une part très lourde en termes de ressources informatique, et requiert une vaste base d'images d'apprentissage pour entraîner le CNN. L'article de Hay Edouard et al "Performance of convolutional neural networks for identification of bacteria in 3D microscopy datasets" décrit aussi une approche qu'utilise un réseau de neurones à convolution.

Le problème technique objectif de la présente invention est, par conséquent, de pouvoir disposer d'une solution à la fois plus performante et plus légère de classification d'images d'une particule biologique.

PRESENTATION DE L'INVENTION

Selon un premier aspect, la présente invention concerne un procédé de classification d'au moins une image d'entrée représentant une particule cible dans un échantillon, le procédé étant caractérisé en ce qu'il comprend la mise en œuvre, par des moyens de traitement de données d'un client, d'étapes de :

(b) Extraction d'une carte de caractéristiques de ladite particule cible à partir de l'image d'entrée ;
(c) réduction du nombre de variables de la carte de caractéristiques extraite, au moyen de l'algorithme t-SNE ;
(d) Classification non-supervisée de ladite image d'entrée en fonction de ladite carte de caractéristiques présentant un nombre de variables réduit.

Selon des caractéristiques avantageuses et non limitatives :
Les particules sont représentées d'une manière homogène dans l'image d'entrée et dans chaque image élémentaire, en particulier centrées et alignées selon une direction prédéterminée.

Le procédé comprend une étape (a) d'extraction de ladite image d'entrée d'une image globale de l'échantillon, de sorte à représenter ladite particule cible de ladite manière homogène.

L'étape (a) comprend la segmentation de ladite image globale de sorte à détecter ladite particule cible dans l'échantillon, puis le recadrage de l'image d'entrée sur ladite particule cible détectée.

L'étape (a) comprend l'obtention de ladite image globale à partir d'une image en intensité de l'échantillon acquise par un dispositif d'observation.

Ladite carte de caractéristiques est un vecteur de coefficients numériques chacun associés à une image élémentaire d'un ensemble d'images élémentaire chacune représentant une particule de référence, l'étape (a) comprenant la détermination des coefficients numériques tels qu'une combinaison linéaire desdites images élémentaires pondérées par lesdits coefficients approxime la représentation de ladite particule cible dans l'image d'entrée.

Ladite carte de caractéristiques de ladite particule cible est extraite à l'étape (b) au moyen d'un réseau de neurones à convolution pré-entraîné sur une base d'images publique.

L'étape (c) comprend, au moyen dudit algorithme t-SNE, la définition d'un espace de projection de chaque carte de caractéristiques d'une base d'apprentissage de cartes de caractéristiques déjà classifiées de particules (dans un échantillon et de la carte de caractéristiques extraite, ladite carte de caractéristiques présentant un nombre de variables réduit étant le résultat de la projection de la carte de caractéristiques extraite dans ledit espace de projection.

L'étape (c) comprend la mise en œuvre d'un algorithme des k plus proches voisins dans ledit espace de projection.

Le procédé est un procédé de classification d'une séquence d'images d'entrée représentant ladite particule cible dans un échantillon au cours du temps, dans lequel l'étape (b) comprend la concaténation des cartes de caractéristiques extraites pour chaque image d'entrée de ladite séquence.

Selon un deuxième aspect, est proposé un système de classification d'au moins une image d'entrée représentant une particule cible dans un échantillon comprenant au moins un client comprenant des moyens de traitement de données, caractérisé en ce que lesdits moyens de traitement de données sont configurés pour implémenter :

- l'extraction d'une carte de caractéristiques de ladite particule cible par analyse de l'au moins une image d'entrée ;
- la réduction du nombre de variables de la carte de caractéristiques au moyen de l'algorithme t-SNE ;
- la classification non-supervisée de ladite image d'entrée en fonction de ladite carte de caractéristiques présentant un nombre de variables réduit.

Selon des caractéristiques avantageuses et non limitatives, le système comprend en outre un dispositif d'observation de ladite particule cible dans l'échantillon.

Selon un troisième et un quatrième aspect sont proposés un produit programme d'ordinateur comprenant des instructions de code pour l'exécution d'un procédé selon le premier aspect de classification d'au moins une image d'entrée représentant une particule cible dans un échantillon ; et un moyen de stockage lisible par un équipement informatique sur lequel un produit programme d'ordinateur comprend des instructions de code pour l'exécution d'un procédé selon le premier aspect de classification d'au moins une image d'entrée représentant une particule cible dans un échantillon.

PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :

- la figure 1 est un schéma d'une architecture pour la mise en œuvre du procédé selon l'invention ;
- la figure 2a représente un exemple de dispositif d'observation de particules dans un échantillon utilisé dans un mode de réalisation préféré du procédé selon l'invention ;
- la figure 3a illustre l'obtention de l'image d'entrée dans un mode de réalisation du procédé selon l'invention ;
- la figure 3b illustre l'obtention de l'image d'entrée dans un mode de réalisation préféré du procédé selon l'invention ;
- la figure 4 représente les étapes d'un mode de réalisation préféré du procédé selon l'invention ;
- la figure 5a représente un exemple de dictionnaire d'images élémentaires utilisé dans un mode de réalisation préféré du procédé selon l'invention ;
- la figure 5b représente un exemple d'extraction de vecteur et de matrice de caractéristique dans un mode de réalisation préféré du procédé selon l'invention ;
- la figure 6 représente un exemple d'architecture de réseau de neurones à convolution utilisé dans un mode de réalisation préféré du procédé selon l'invention ;
- la figure 7 représente un exemple de projection t-SNE utilisée dans un mode de réalisation préféré du procédé selon l'invention.

DESCRIPTION DETAILLEE

*Architecture*

L'invention concerne un procédé de classification d'au moins une image d'entrée représentative d'une particule 11a-11f présente dans un échantillon 12, dite particule cible. A noter que le procédé peut être mise en œuvre en parallèle pour tout ou partie des particules 11a-11f présentes dans un échantillon 12, chacune étant considérée particule cible à tour de rôle.

Comme l'on verra, ce procédé peut comprendre une ou plusieurs composantes d'apprentissage automatique, et notamment un ou plusieurs classifieurs, y compris un réseau de neurones à convolution, CNN.

Les données d'entrée ou d'apprentissage sont de type image, et représentent la particule cible 11a-11f dans un échantillon 12 (en d'autres termes il s'agit d'images de l'échantillon dans lequel la particule cible est visible). Comme l'on verra, on peut avoir en entrée une séquence d'images de la même particule cible 11a-11f (et le cas échéant une pluralité de séquences d'images de particules 11a-11f de l'échantillon 12 si plusieurs particules sont considérées).

L'échantillon 12 consiste en un liquide tel que de l'eau, une solution tampon, un milieu de culture ou un milieu réactif (comprenant ou non un antibiotique), dans lequel se trouvent les particules 11a-11f à observer.

En variante, l'échantillon 12 peut se présenter sous la forme d'un milieu solide, de préférence translucide, tel qu'une gélose agar-agar, dans lequel se trouvent les particules 11a-11f. L'échantillon 12 peut également être un milieu gazeux. Les particules 11a-11f peuvent se situer à l'intérieur du milieu ou bien à la surface de l'échantillon 12.

Les particules 11a-11f peuvent être des micro-organismes tels que des bactéries, des champignons ou des levures. Il peut également s'agir de cellules, organismes multicellulaires, ou toute autre particule de type particule polluante, poussière. Dans la suite de la description, on prendra l'exemple préféré dans laquelle la particule est une bactérie (et comme l'on verra l'échantillon 12 intègre un antibiotique) La taille des particules 11a-11f observées varie entre 500nm et plusieurs centaines de $\mu m$, voire quelques millimètres.

La « classification » d'une image d'entrée (ou d'une séquence d'images d'entrée) consiste en la détermination d'au moins une classe parmi un ensemble de clases possibles descriptives de l'image. Par exemple, dans le cas de particules de type bactérie, on peut avoir une classification binaire, i.e. deux classes possibles d'effet « division » ou « pas de division », témoignant respectivement d'une résistance ou non à un antibiotique. La présente invention ne sera limitée à aucune sorte de classification particulière, même si on décrira principalement l'exemple d'une classification binaire de l'effet d'un antibiotique sur ladite particule cible 11a-11f.

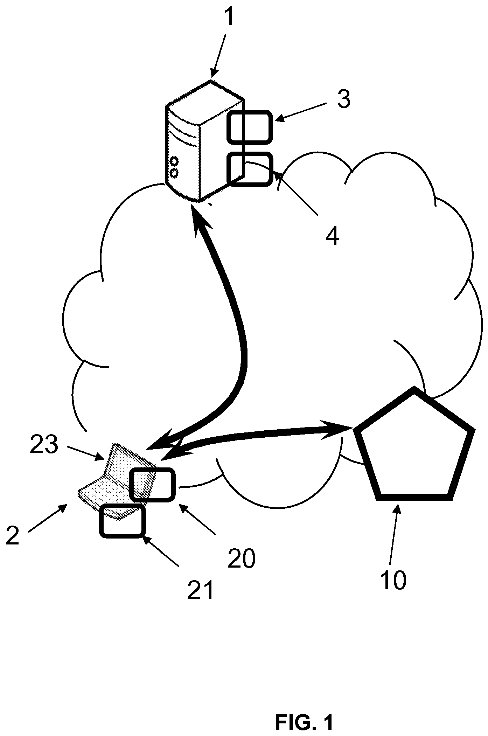

Les présents procédés sont mis en œuvre au sein d'une architecture telle que représentée par la **Figure 1,** grâce à un serveur 1 et un client 2. Le serveur 1 est l'équipement d'apprentissage (mettant en œuvre le procédé d'apprentissage) et le client 2 est un équipement d'utilisation (mettant en œuvre le procédé de classification), par exemple un terminal d'un médecin ou d'un hôpital.

Il est tout à fait possible que les deux équipements 1, 2 soient confondus, mais de façon préférée le serveur 1 est un équipement distant, et le client 2 un équipement grand public, notamment un ordinateur du bureau, un portable, etc. L'équipement client 2 est avantageusement connecté à un dispositif d'observation 10, de sorte à pouvoir directement acquérir ladite image d'entrée (ou comme l'on verra plus loin des données « brutes » d'acquisition telles qu'une image globale de l'échantillon 12, voire des matrices électromagnétiques), typiquement pour la traiter en direct, alternativement on chargera l'image d'entrée sur l'équipement client 2.

Dans tous les cas, chaque équipement 1, 2 est typiquement un équipement informatique distant relié à un réseau local ou un réseau étendu tel que le réseau internet pour l'échange des données. Chacun comprend des moyens de traitement de données 3, 20 de type processeur, et des moyens de stockage de données 4, 21 telle qu'une mémoire informatique, par exemple une mémoire flash ou un disque dur. Le client 2 comprend typiquement une interface utilisateur 22 telle qu'un écran pour interagir.

Le serveur 1 stocke avantageusement une base de données d'apprentissage, i.e. un ensemble d'images de particules 11a-11f dans diverses conditions (voir plus loin) et/ou un ensemble de cartes de caractéristiques déjà classifiées (par exemple associées à des étiquettes « avec division » ou « sans division » signalant la sensibilité ou la résistance à l'antibiotique). A noter que les données d'apprentissage pourront être associés à des étiquettes définissant les conditions de test, par exemple indiquant pour des cultures de bactéries des « souches », « conditions de l'antibiotique », « temps », etc.

*Acquisition*

Même si comme expliqué le présent procédé peut directement prendre en entrée toute image de la particule cible 11a-11f, obtenue d'une manière quelconque. De manière préférée le présent procédé commence par une étape (a) d'obtention de l'image d'entrée à partir de données fournies par un dispositif d'observation 10.

De manière connue, l'homme du métier pourra utiliser des techniques de microscopie holographique numérique DHM, en particulier telles que décrites dans la demande internationale WO2017/207184. En particulier, on pourra acquérir une image en intensité de l'échantillon 12 appelée hologramme, qui n'est pas focalisée sur la particule cible (on parle d'image « out-of-focus »), et qui pourra être traitée par des moyens de traitement de données (intégrés au dispositif 10 ou ceux 20 du client 2 par exemple, voir plus loin). On comprend que l'hologramme « représente » d'une certaine manière toutes les particules 11a-11f dans l'échantillon.

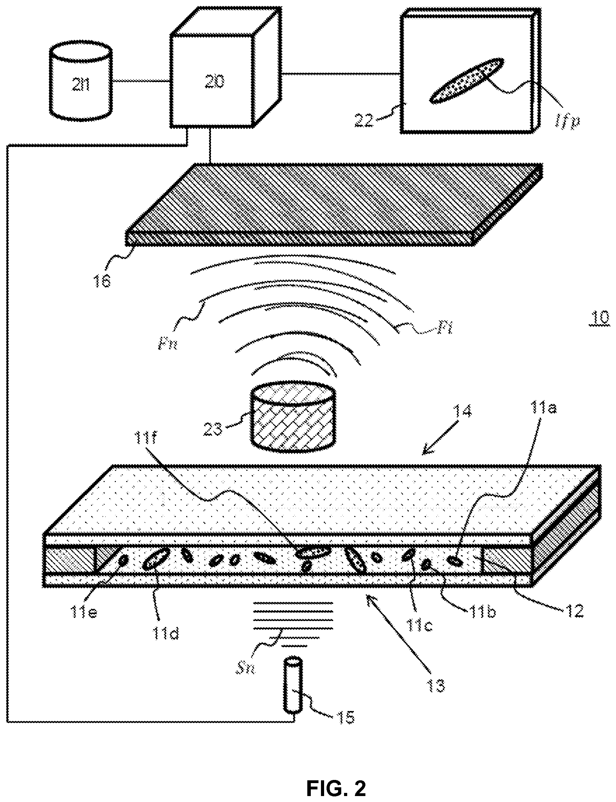

La **Figure 2** illustre un exemple de dispositif d'observation 10 d'une particule 11a-11f présente dans un échantillon 12. L'échantillon 12 est disposé entre une source lumineuse 15, spatialement et temporellement cohérente (e.g. un laser) ou pseudo-cohérente (e.g. une diode électroluminescente, une diode laser), et un capteur numérique 16 sensible dans la gamme spectrale de la source lumineuse. De préférence, la source lumineuse 15 comporte une faible largeur spectrale, par exemple inférieure à 200nm, inférieure à 100nm ou encore inférieure à 25 nm. Dans ce qui suit, il est fait référence à la longueur d'onde d'émission centrale de la source lumineuse, par exemple dans le domaine visible. La source lumineuse 15 émet un signal cohérent Sn orienté sur une première face 13 de l'échantillon, par exemple acheminé par un guide d'onde tel qu'une fibre optique.

L'échantillon 12 (comme expliqué typiquement un milieu de culture) est contenu dans une chambre d'analyse, délimitée verticalement par une lame inférieure et une lame supérieure, par exemple des lames de microscope conventionnelles. La chambre d'analyse est délimitée latéralement par un adhésif ou par tout autre matériau étanche. Les lames inférieure et supérieure sont transparentes à la longueur d'onde de la source lumineuse 15, l'échantillon et la chambre laissant passer par exemple plus de 50% la longueur d'onde de la source lumineuse sous incidence normale sur la lame inférieure.

De préférence, les particules 11a-11f sont disposées dans l'échantillon 12 au niveau de la lame supérieure. La face inférieure de la lame supérieure comprend à cet effet des ligands permettant d'accrocher les particules, par exemple des polycations (e.g. poly-Llysine) dans le cadre de microorganismes Ceci permet de contenir les particules dans une épaisseur égale à, ou proche de, la profondeur de champ du système optique, à savoir dans une épaisseur inférieure à 1mm (e.g. lentille à tube), et de préférence inférieure à $100\mu m$ (e.g. objectif de microscope). Les particules 11a-11f peuvent néanmoins se déplacer dans l'échantillon 12.

De préférence, le dispositif comprend un système optique 23 constitué, par exemple, d'un objectif de microscope et d'une lentille de tube, disposé dans l'air et à distance fixe de l'échantillon. Le système optique 23 est optionnellement équipé d'un filtre pouvant être situé devant l'objectif ou entre l'objectif et la lentille de tube. Le système optique 23 est caractérisé par son axe optique, son plan d'objet, également dénommé plan de mise au point, à une distance de l'objectif, et son plan d'image, conjugué du plan d'objet par le système optique. En d'autres termes, à un objet situé dans le plan d'objet, correspond une image nette de cet objet dans le plan image, également appelé plan focal. Les propriétés optiques du système 23 sont fixes (e.g. optique à focale fixe). Les plans objet et image sont orthogonaux à l'axe optique.

Le capteur d'image 16 est situé, en regard d'une seconde face 14 de l'échantillon, dans le plan focal ou à proximité de ce dernier. Le capteur, par exemple un capteur CCD ou CMOS, comprend un réseau bidimensionnel périodique de sites élémentaires sensibles, et une électronique de proximité qui règle le temps d'exposition et la remise à zéro des sites, d'une manière connue en soi. Le signal de sortie d'un site élémentaire est fonction de la quantité de rayonnement de la gamme spectrale incident sur ledit site pendant la durée d'exposition. Ce signal est ensuite converti, par exemple par l'électronique de proximité, en point image, ou « pixel », d'une image numérique. Le capteur produit ainsi une image numérique sous forme d'une matrice à C colonnes et L lignes. Chaque pixel de cette matrice, de coordonnées (c, l) dans la matrice, correspond d'une manière connue en soi à une position de coordonnées cartésiennes (x(c, l), y(c, l)) dans le plan focal du système optique 23, par exemple la position du centre du site sensible élémentaire de forme rectangulaire.

Le pas et le facteur de remplissage du réseau périodique sont choisis pour respecter le critère Shannon-Nyquist vis-à-vis de la taille des particules observées, de manière à définir au moins deux pixels par particule. Ainsi, le capteur d'image 16 acquiert une image en transmission de l'échantillon dans la gamme spectrale de la source lumineuse.

L'image acquise par le capteur d'image 16 comprend des informations holographiques dans la mesure où elle résulte de l'interférence entre une onde diffractée par les particules 11a-11f et une onde de référence ayant traversé l'échantillon sans avoir interagi avec lui. On comprend évidemment, comme décrit plus haut, que dans le cadre d'un capteur CMOS ou CCD, l'image numérique acquise est une image en intensité, l'information de phase étant donc ici codée dans cette image en intensité.

Alternativement, il est possible de diviser le signal cohérent Sn issu de la source lumineuse 15 en deux composantes, par exemple au moyen d'une lame semi-transparente. La première composante sert alors d'onde de référence et la seconde composante est diffractée par l'échantillon 12, l'image dans le plan image du système optique 23 résultant de l'interférence entre l'onde diffractée et l'onde de référence.

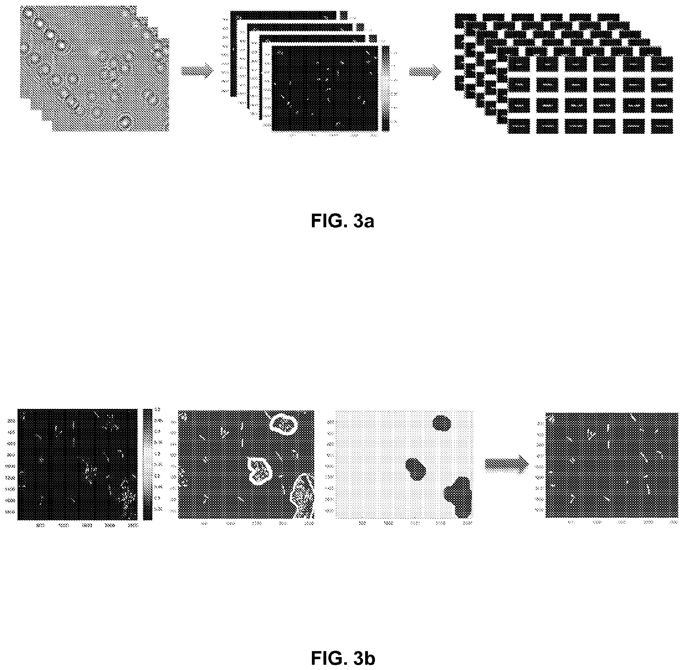

En référence à la **Fig. 3a,** il est possible dans l'étape (a) de reconstruire à partir de l'hologramme au moins une image globale de l'échantillon 12, puis d'extraire ladite image d'entrée de l'image globale de l'échantillon.

On comprend en effet que la particule cible 11a-11f doit être représentée d'une manière homogène dans l'image d'entrée, en particulier centrée et alignée selon une direction prédéterminée (par exemple la direction horizontale). Les images d'entrée doivent en outre présenter une taille standardisée (Il est également souhaitable qu'on ne voie que la particule cible 11a-11f dans l'image d'entrée). On appelle ainsi « vignette » (en anglais thumbnail) l'image d'entrée, on peut définir par exemple une taille de 250x250 pixels. Dans le cas d'une séquence d'images d'entrées, on prend par exemple une image par minute pendant un intervalle de temps de 120 minutes, la séquence formant ainsi un « stack » 3D de taille 250x250x120.

La reconstruction de l'image globale est mise en œuvre comme expliqué par des moyens de traitement de données du dispositif 10 ou ceux 20 du client 2.

Typiquement, on construit (pour un instant d'acquisition) une série de matrices complexes nommées « matrices électromagnétiques », modélisant à partir de l'image en intensité de l'échantillon 12 (l'hologramme) le front d'onde lumineux propagé le long de l'axe optique pour une pluralité d'écarts par rapport au plan de mise au point du système optique 23, et en particulier des écarts positionnés dans l'échantillon.

Ces matrices peuvent être projetées dans l'espace réel (par exemple via la norme hermitienne), de sorte à constituer une pile d'images globales à diverses distances de focalisation.

A partir de là on peut déterminer une distance de focalisation moyenne (et sélectionner l'image globale correspondante, ou la recalculer à partir de l'hologramme), voire déterminer une distance de focalisation optimale pour la particule cible (et à nouveau sélectionner l'image globale correspondante, ou la recalculer à partir de l'hologramme).

Dans tous les cas, en référence à la **Figure 3b,** l'étape (a) comprend avantageusement la segmentation de ladite ou lesdites images globales de sorte à détecter ladite particule cible dans l'échantillon, puis le recadrage. En particulier, ladite image d'entrée peut être extraite de l'image globale de l'échantillon, de sorte à représenter ladite particule cible de ladite manière homogène.

En général, la segmentation permet de détecter toutes les particules d'intérêt, en supprimant les artefacts tels que des filaments ou des micro-colonies, de sorte à améliorer la ou les images globales, puis on sélectionne une des particules détectées comme la particules cible, et la vignette correspondante est extraite. Comme expliqué, on peut faire ce travail pour toutes les particules détectées.

La segmentation pourra être mise en œuvre de toute manière connue. Dans l'exemple de la figure 3b, on commence par une segmentation fine pour éliminer les artefacts, puis on met en œuvre une segmentation moins fine pour cette fois détecter les particules 11a-11f. L'homme du métier pourra utiliser toute technique de segmentation connue.

Si l'on souhaite obtenir une séquence d'images d'entrée pour une particule cible 11a-11f, on pourra mettre en œuvre des techniques de tracking pour suivre les éventuels déplacements de la particule d'une image globale à la suivante.

A noter que l'ensemble des images d'entrées obtenus pour un échantillon (pour plusieurs voire toutes les particules de l'échantillon 12, et ce dans le temps) peut être mis en commun pour former une base descriptive de l'échantillon 12 (en d'autres termes une base descriptive de l'expérience), comme l'on voit à droite de la figure 3a, notamment copiée sur les moyens de stockage 21 du client 2. On parle de niveau « champ », par opposition au niveau « particule ». Par exemple, si les particules 11a-11f sont des bactéries et l'échantillon 12 contient (ou non un antibiotique), cette base descriptive contient toutes les informations sur la croissance, la morphologie, la structure interne et les propriétés optiques de ces bactéries sur tout le champ de l'acquisition. Comme l'on verra, cette base descriptive peut être transmise au serveur 1 pour intégration dans ladite base d'apprentissage.

*Extraction de caractéristiques*

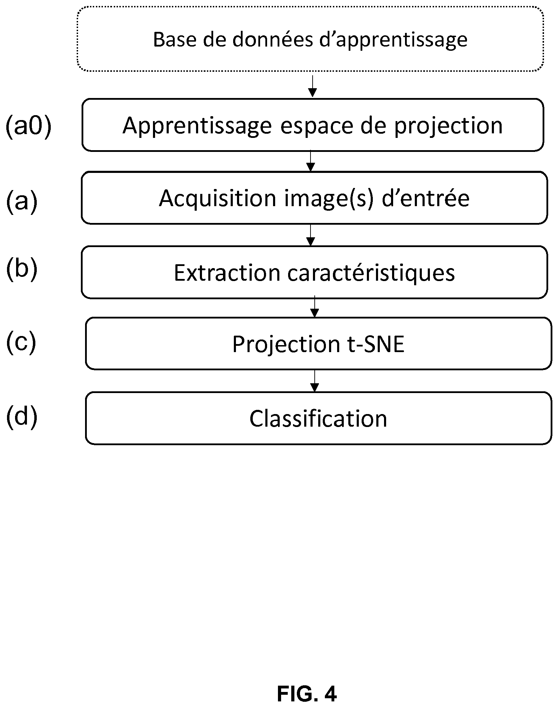

En référence à la **Figure 4,** le présent procédé se distingue particulièrement en ce qu'il sépare une étape (b) d'extraction d'une carte de caractéristiques (« feature map ») à partir de l'image d'entrée, et une étape (d) de classification de l'image d'entrée en fonction de ladite carte de caractéristiques, au lieu de tenter de classifier directement l'image d'entrée, avec entre les deux une étape (c) de réduction du nombre de variables de la carte de caractéristiques au moyen de l'algorithme t-SNE. Plus précisément, l'étape (c) voit la construction d'une projection de la carte de caractéristiques, dite « projection t-SNE » présentant un nombre de variables inférieur au nombre de variables de la carte de caractéristiques extraite, avantageusement seulement deux ou trois variables.

Dans la suite de la présente description, on fera bien la distinction entre le nombre de « dimensions » des cartes de caractéristiques, au sens géométrique, c'est-à-dire le nombre de directions indépendantes dans lesquelles ces cartes s'étendent (par exemple un vecteur est un objet de dimension 1, et les présentes cartes de caractéristiques sont au moins de dimension 2, avantageusement de dimension 3, et parfois de dimension 4), et le nombre de « variables » de ces cartes de caractéristiques, c'est-à-dire la taille selon chaque dimension, i.e. le nombre de degrés de liberté indépendants (qui correspond en pratique à la notion de dimension dans un espace vectoriel - plus précisément, l'ensemble des cartes de caractéristiques ayant un nombre de variables donné constitue un espace vectoriel de dimension égale à ce nombre de variables, et similairement pour l'ensemble de projection t-SNE). L'étape (c) est ainsi appelée parfois étape de « réduction de la dimensionnalité », dans la mesure où l'on projette depuis un premier espace vectoriel de grande dimension (espace des cartes de caractéristiques) vers un deuxième espace vectoriel de faible dimension (espace 2D ou 3D), mais en pratique c'est bien le nombre de variables qui est réduit.

On décrira ainsi plus bas deux exemples dans lequel les cartes de caractéristique extraites à l'issue de l'étape (b) sont respectivement un objet bidimensionnel (i.e. de dimension 2 - une matrice) de taille 60x25, ayant ainsi 1500 variables ; et un objet tridimensionnel (i.e. de dimension 3) de taille 7x7x512, ayant ainsi 25088 variables. Pour ces deux exemples on réduit le nombre de variable à 2 ou 3.

Comme l'on verra, chaque étape peut impliquer un mécanisme indépendant d'apprentissage automatique (mais pas nécessairement), d'où le fait que ladite base d'apprentissage du serveur 1 puisse comprendre aussi bien des images de particules que des cartes de caractéristiques, et ce pas nécessairement déjà classifiés.

L'étape (b) principale est ainsi une étape d'extraction par les moyens de traitement de données 20 du client 2 d'une carte de caractéristiques de ladite particule cible, c'est-à-dire un « codage » de la particule cible.

L'homme du métier pourra ici utiliser toute technique d'extraction d'une carte de caractéristiques, y compris des techniques susceptibles de produire des cartes de caractéristiques massives et à un grand nombre de dimensions (trois voire quatre), puisque l'algorithme t-SNE de l'étape (c) permet astucieusement d'obtenir une version « simplifiée » de la carte de caractéristique qui est ensuite très facile à manipuler.

On va à présent voir plusieurs techniques permettant en particulier d'obtenir une carte de caractéristiques de niveau sémantique élevé et ce sans nécessiter ni une forte puissance de calcul ni une base de données annotées.

Dans le cas où l'on a une séquence d'images d'entrée, l'étape (b) comprend ainsi avantageusement l'extraction d'une carte de caractéristiques par image d'entrée, lesquels peuvent être combinés sous la forme d'une seule carte de caractéristiques appelée « profil » de la particule cible. Plus précisément, les cartes ont toutes la même taille et forment une séquence de cartes, il suffit donc de les concaténer selon l'ordre des images d'entrée de sorte à obtenir une carte de caractéristiques de « grande profondeur ». Dans un tel cas, la réduction du nombre de variables par t-SNE est encore plus intéressante.

Alternativement ou en complément, on peut sommer les cartes de caractéristiques correspondant à plusieurs images d'entrées associées à plusieurs particules 11a-11f de l'échantillon 12.

Selon un premier mode de réalisation de l'étape (b), la carte de caractéristiques est simplement un vecteur de caractéristiques, et lesdites caractéristiques sont des coefficients numériques chacun associé à une image élémentaire d'un ensemble d'images élémentaire chacune représentant une particule de référence tels qu'une combinaison linéaire desdites images élémentaires pondérées par lesdits coefficients approxime la représentation de ladite particule dans l'image d'entrée.

C'est ce que l'appelle le « codage épars » (en anglais « sparse coding »). Lesdites images élémentaires sont appelées « atomes », et l'ensemble des atomes est appelé « dictionnaire ». L'idée du codage épars est d'exprimer toute image d'entrée comme combinaison linéaire desdits atomes, par analogie avec les mots du dictionnaire. Plus précisément, pour un dictionnaire $D$ de dimension $p$, en notant $\alpha$ un vecteur de caractéristiques également de dimension $p$, on cherche la meilleure approximation $D\alpha$ de l'image d'entrée $x$. En d'autres termes, en notant $\alpha^*$ le vecteur optimal (le sparse code de l'image d'entrée x), l'étape (b) consiste à résoudre un problème de minimisation d'une fonctionnelle avec $\lambda$ un paramètre

de régularisation (qui permet de faire un compromis entre la qualité d'approximation et la « sparsity » c'est-à-dire le caractère épars du vecteur, i.e. impliquer le moins d'atomes possible). On peut par exemple poser le problème de minimisation sous contrainte de la sorte :

$$\alpha^* \in \arg\min_{\alpha \in \mathbb{R}^p}[\|\alpha\|_1 \; t.\,q.\; x = D\alpha]$$

Qu'on peut également exprimer comme un problème de formulation variationelle de la sorte :

$$\alpha^* = \arg\min_{\alpha \in \mathbb{R}^p}\left[\frac{1}{2}\|x - D\alpha\|_2^2 + \lambda\|\alpha\|_1\right]$$

Lesdits coefficients ont avantageusement valeur dans l'intervalle [0 ;1] (c'est plus simple que dans R), et on comprend qu'en général la majorité des coefficients ont pour valeur 0, de fait du caractère « épars » du codage. Les atomes associés à des coefficients non nuls sont appelés atomes activés.

Naturellement, les images élémentaires sont des vignettes comparables aux images d'entrée, i.e. les particules de référence y sont représentées de la même manière homogène que dans l'image d'entrée, en particulier centrées et alignées selon ladite direction prédéterminée, et les images élémentaires ont avantageusement la même taille que les images d'entrée (par exemple 250x250).

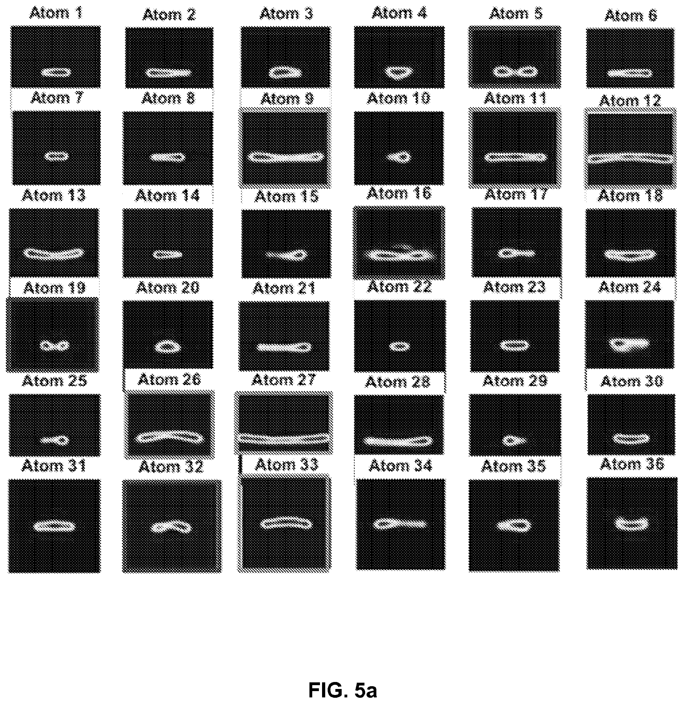

La **Figure 5a** illustre ainsi un exemple de dictionnaire de 36 images élémentaires (cas de la bactérie E. Coli avec l'antibiotique cefpodoxime).

Les images de référence (les atomes) peuvent être prédéfinis. Toutefois, de manière préférée, le procédé comprend une étape (b0) d'apprentissage, en particulier par les moyens de traitement de données 3 du serveur 1, à partir d'une base d'apprentissage, des images de référence (i.e. du dictionnaire), de sorte que tout le procédé peut ne nécessiter aucune intervention humaine.

Cette méthode d'apprentissage, dite « dictionnary learning » puisqu'il s'agit d'apprendre un dictionnaire, est non-supervisée dans la mesure où elle ne nécessite pas d'annoter les images de la base d'apprentissage, et est donc d'une simplicité maximale à mettre en œuvre. En effet, on comprend qu'annoter à la main des milliers d'images serait très long et très couteux.

L'idée est simplement de disposer dans la base d'apprentissage de vignettes représentant des particules 11a-11f dans des conditions variées, et à partir de là on va pouvoir trouver les atomes permettant de représenter le plus facilement possible n'importe quelle vignette.

Dans le cas où l'on a une séquence d'images d'entrée, l'étape (b) comprend comme expliqué avantageusement l'extraction d'un vecteur de caractéristiques par image d'entrée, lesquels peuvent être combinés sous la forme d'une matrice de caractéristiques appelée « profil » de la particule cible. Plus précisément, les vecteurs ont tous la même taille (le nombre d'atomes) et forment une séquence de vecteurs, il suffit donc de les juxtaposer selon l'ordre des images d'entrée de sorte à obtenir un sparse code bidimensionnel (qui code l'information spatio-temporelle, d'où les deux dimensions).

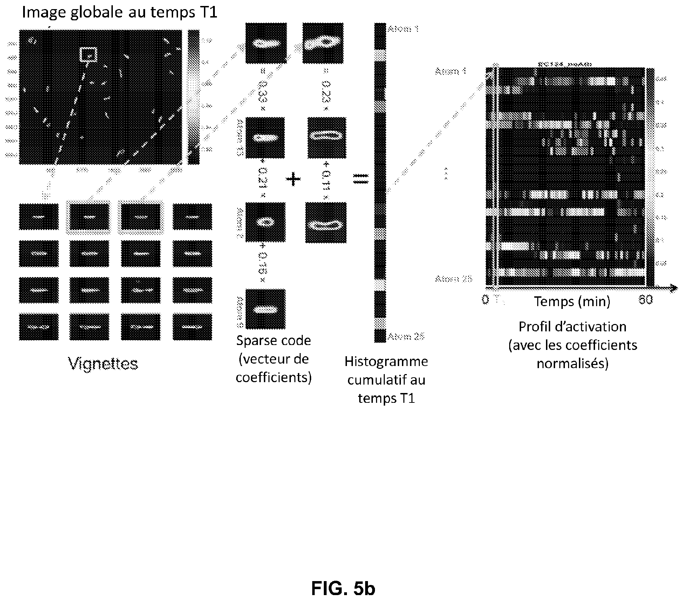

La **Figure 5b** représente un autre exemple d'extraction d'un vecteur de caractéristiques, cette fois avec un dictionnaire de 25 atomes. On voit la totalité de l'image globale obtenue à un temps T1 donné, et les différentes images d'entrée extraites (correspondant aux particules détectées). Ainsi, l'image représentant la 2e particule cible peut être approximée comme 0.33 fois l'atome 13 plus 0.21 fois l'atome 2 plus 0.16 fois l'atome 9 (soit un vecteur (0 ; 0.21 ; 0 ; 0 ; 0 ; 0 ; 0 ; 0 ; 0.16 0 ; 0 ; 0 ; 0.33 ; 0 ; 0 ; 0 ; 0 ; 0 ; 0 ; 0 ; 0 ; 0 ; 0 ; 0 ; 0).

Le vecteur sommé, dit « histogramme cumulatif » est représenté au milieu. Avantageusement, les coefficients sont normalisés de sorte à ce que leur somme soit égale à 1. La matrice sommée (sur 60 minutes), dite « profil d'activation » est représentée à droite, on voit qu'elle présente ainsi une taille 60x25.

On comprend que ce profil d'activation est une carte de caractéristiques de haut niveau représentative de l'échantillon 12 (au cours du temps).

Selon un deuxième mode de réalisation de l'étape (b), on utilise un réseau de neurones à convolution, CNN, pour extraire la carte de caractéristiques. On rappelle en effet que les CNN sont particulièrement adaptés pour les taches de vision. Généralement, un CNN est capable de classifier directement une image d'entrée (i.e. de faire à la fois les étapes (b) et (d)).

Ici le fait de découpler l'étape (b) et l'étape (d) permet de limiter l'utilisation du CNN à l'extraction de caractéristiques, et on peut pour cette étape (b) n'utiliser qu'un réseau de neurones à convolution pré-entraîné sur une base d'images publique, i.e. pour lesquels un apprentissage a déjà eu lieu de manière indépendante. C'est ce que l'on appelle « l'apprentissage par transfert ».

En d'autres termes, il n'est pas nécessaire d'entraîner ou réentraîner le CNN sur la base d'apprentissage d'images de particules 11a-11f, qui peut donc être exempt d'annotations. En effet, on comprend qu'annoter à la main des milliers d'images serait très long et très couteux.

En effet, pour réaliser la tâche d'extraction de caractéristiques, il suffit que le CNN soit discriminant, c'est-à-dire apte à repérer des différences entre images, y compris sur une base d'images publique qui n'a rien à voir avec les présentes images d'entrée. Avantageusement, ledit CNN est un réseau de classification d'images, dans la mesure où l'on sait que de tels réseaux vont manipuler des cartes de caractéristiques spécialement discriminantes vis-à-vis des classes des images, et donc particulièrement adaptées dans le présent contexte des particules 11a-11f à classifier même si ce n'est pas la tâche pour laquelle le CNN a été initialement entraîné. On comprendra que des réseaux de détection, reconnaissance ou encore segmentation d'image sont des cas particuliers de réseaux de classification, puisqu'ils réalisent en fait la tâche de classification (de toute l'images ou d'objets de l'image) plus une autre tâche (comme déterminer des coordonnées de boites englobantes d'objets classifiés pour un réseau de détection, ou générer un masque de segmentation pour un réseau de segmentation).

En ce qui concerne la base publique d'images d'apprentissage, on pourra par exemple prendre la célèbre base publique ImageNet, laquelle comprend plus de 1.5 millions d'images annotées, et qui est adaptée à l'apprentissage supervisé de quasiment tout CNN de traitement d'image (pour des tâches de classification reconnaissance, etc.).

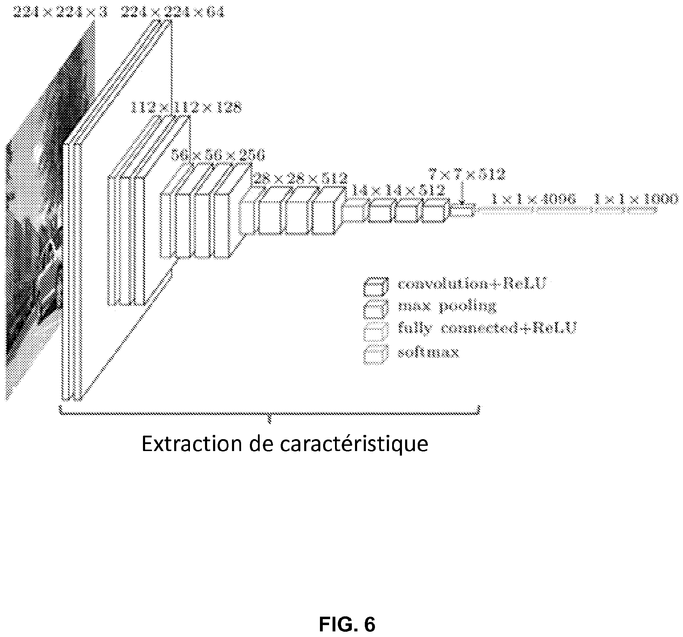

Ainsi, on pourra avantageusement prendre un CNN « sur-étagère » sans la nécessité même de réaliser l'apprentissage. On connait des CNNs de classification, par exemple de type VGG (« Visual Geometry Group », par exemple le modèle VGG-16), AlexNet, Inception ou encore ResNet, pré-entraînés sur la base ImageNet (i.e. ils peuvent être récupérés avec les paramètres initialisées aux bonnes valeurs obtenues après un entraînement sur ImageNet). La **Figure 6** représente l'architecture de VGG-16 (à 16 couches).

Généralement, un CNN comprend deux parties :

- Un premier sous-réseau d'extraction de caractéristiques, comprenant le plus souvent une succession de blocs composés de couches de convolution et de couches d'activation (par exemple la fonction ReLU) pour augmenter la profondeur des cartes de caractéristiques, terminés par une couche de mise en commun (pooling) permettant de diminuer la taille de la carte de caractéristiques (réduction de dimensionnalité de l'entrée - généralement d'un facteur 2). Ainsi dans l'exemple de la figure 6, le VGG-16 a comme expliqué 16 couches réparties en 5 blocs. Le premier prend en entre l'image d'entrée (de taille spatiale 224x224, avec 3 canaux correspondant au caractère RGB de l'image) comprend 2 enchainements convolution+ReLU (une couche de convolution et une couche d'activation à fonction ReLU) montant la profondeur à 64 puis une couche de max pooling (on peut aussi utiliser du global average pooling), avec en sortie une carte de caractéristiques de taille 112x112x64 (les deux premières dimensions sont les dimensions spatiales, et la troisième dimension est la profondeur - ainsi on divise par deux chaque dimension spatiale). Le deuxième bloc a une architecture identique au premier bloc et génère en sortie du dernier ensemble convolution+ReLU une carte de caractéristiques de taille 112x112x128 (profondeur doublée) et en sortie de la couche de max pooling une carte de caractéristiques de taille 56x56x128. Le troisième bloc présente cette fois-ci trois ensembles convolution+ReLU et génère du dernier ensemble convolution+ReLU une carte de caractéristiques de taille 56x56x256 (profondeur doublée) et en sortie en sortie de la couche de max pooling une carte de caractéristiques de taille 28x28x256. Les quatrième et cinquième blocs ont une architecture identique au troisième bloc et génèrent successivement en sortie des cartes de caractéristiques de taille 14x14x512 et 7x7x512 (la profondeur n'augmente plus). Cette carte de caractéristique est la carte « finale ». On comprendra qu'on est limité à aucunes tailles de carte à quelque niveau que ce soit, et que les tailles citées-ci avant ne sont que des exemples.

- Un deuxième sous-réseau de traitement des caractéristiques, et notamment un classifieur si le CNN est un réseau de classification. Ce sous-réseau prend en entrée la carte de caractéristiques finale générée par le premier sous-réseau, et renvoie le résultat escompté, par exemple la classe de l'image d'entrée si le CNN fait de la classification. Ce deuxième sous-réseau contient typiquement une ou plusieurs couches entièrement connectées (FC) et une couche d'activation finale, par exemple softmax (ce qui est le cas de VGG-16). Les deux sous-réseaux sont généralement entraînés en même temps de manière supervisée.

Ainsi, dans ce deuxième mode de réalisation l'étape (b) est préférentiellement mise en œuvre au moyen du sous-réseau d'extraction de caractéristiques dudit réseau de neurones à convolution pré-entraîné, c'est-à-dire la première partie telle que mise en évidence sur la figure 6 pour l'exemple de VGG-16.

Plus précisément, ledit CNN pré-entrainé tel que VGG-16 n'est pas sensé renvoyer de cartes de caractéristiques, celle-ci n'étant qu'un état interne. En « tronquant » le CNN pré-appris, i.e. en utilisant seulement les couches du premier sous-réseau on obtient en sortie la carte de caractéristique finale contenant l'information la plus « profonde ».

On comprend qu'il est également tout à fait possible de prendre comme sous-réseau d'extraction de caractéristiques une partie n'allant pas jusqu'à la carte de caractéristiques finale, par exemple seulement les blocs 1 à 3 au lieu d'aller jusqu'au bloc 5. L'information est plus étendue mais moins profonde.

Dans le cas où l'on a une séquence d'images d'entrée, à noter qu'on peut, au lieu d'extraire une carte de caractéristiques par image d'entrée, et les combiner sous la forme d'une seule carte de caractéristiques (en les concaténant selon l'ordre des images d'entrée de sorte à obtenir une carte de caractéristiques de « grande profondeur »), on peut directement utiliser un CNN dit 3D prenant en entrée toute la séquence d'images d'entrée, sans avoir besoin de travailler image par image.

Pour cela, l'étape (b) comprend la concaténation préalable desdites images d'entrées de la séquence sous la forme d'une pile tridimensionnelle, autrement dit un « stack » 3D, puis l'extraction directe d'une carte de caractéristiques de ladite particule cible 11a-11f à partir de la pile tridimensionnelle au moyen du CNN 3D.

La pile tridimensionnelle est traitée par le CNN 3D comme un objet unique de dimension trois (par exemple de taille 250x250x120 si on a des images d'entrée de taille 250x250 et une image acquise par minute pendant 120 minutes - les deux premières dimensions sont classiquement les dimensions spatiales (i.e. la taille des images d'entrée) et la troisième dimension est la dimension « temporelle » (instant d'acquisition)) à un seul canal, et non pas comme un objet de dimension deux à plusieurs canaux (comme l'est par exemple une image RGB), de sorte que la carte de caractéristiques de sortie est de dimension quatre.

Le présent CNN 3D utilise au moins une couche de convolution 3D qui modélise la dépendance spatio-temporelle entre les différentes images d'entrées.

Par couche de convolution 3D, on entend une couche de convolution appliquant des filtres de dimension quatre, et ainsi apte à travailler sur plusieurs canaux de piles déjà tridimensionnelles, c'est-à-dire une carte de caractéristiques de dimension quatre. En d'autres termes, la couche de convolution 3D applique à une carte de caractéristiques d'entrée de dimension quatre des filtres de dimension quatre de sorte à générer une carte de caractéristiques de sortie de dimension quatre La quatrième et dernière dimension est la profondeur sémantique, comme dans toute carte de caractéristiques.

Cela est à différentier des couches de convolution classiques qui sont ne sont aptes qu'à travailler sur des cartes de caractéristiques tridimensionnelles représentant plusieurs canaux d'objets bidimensionnels (images).

Cette notion de convolution 3D peut paraître contre-intuitive, mais elle généralise la notion de couche de convolution qui prévoit seulement qu'on applique une pluralité de « filtres » d'une profondeur égale au nombre de canaux de l'entrée (i.e. la profondeur de la carte de caractéristiques d'entrée), en les balayant sur l'ensemble des dimensions de l'entrée (en 2D pour une image), le nombre de filtres définissant la profondeur de sortie.

Notre convolution 3D applique donc des filtres de dimension quatre de profondeur égale au nombre de canaux de piles tridimensionnelles en entrée, et balaie ces filtres sur tout le volume d'une pile tridimensionnelle, donc les deux dimensions spatiales mais aussi la dimension temporelle, i.e. en 3D (d'où l'appellation convolution 3D). On obtient ainsi bien une pile tridimensionnelle par filtre, i.e. une carte de caractéristiques de dimension quatre. Dans une couche de convolution classique, utiliser un grand nombre de filtres permet certes augmenter la profondeur sémantique en sortie (le nombre de canaux), mais on aura toujours une carte de caractéristiques de dimension trois.

*Réduction du nombre de variables*

La carte de caractéristiques obtenue à l'étape (b) (en particulier en cas de séquences d'images d'entrées) peut avoir un nombre de variables très élevé (plusieurs milliers voire dizaines de milliers) de sorte qu'une classification directe serait complexe.

On utilise à ce titre dans une étape (c) l'algorithme t-SNE avec à la clé deux avantages :

- L'utilisation d'un espace de faible dimensions (dit espace de projection, ou parfois espace de visualisation), avantageusement deux, permet une visualité et une manipulation des données bien plus simple et intuitive que dans l'espace d'origine des cartes de caractéristiques ;
- et surtout, une classification non-supervisée de l'image d'entrée est possible à l'étape (c), c'est-à-dire ne nécessitant pas l'apprentissage d'un classifieur.

L'astuce est qu'il est possible de construire une projection t-SNE de toute la base d'apprentissage, i.e. de définir l'espace de projection en fonction de la base d'apprentissage.

Pour reformuler encore, on peut grâce à l'algorithme t-SNE représenter la carte de caractéristiques de l'image d'entrée et chaque carte de caractéristiques de la base d'apprentissage par une projection à deux ou trois variables dans un même espace de projection, tel que deux cartes de caractéristiques qui sont proches (respectivement éloignées) dans l'espace d'origine sont proches (respectivement éloignées) dans l'espace de projection.

L'algorithme t-SNE (t-distributed stochastic neighbor embedding) est en effet une méthode non-linéaire de réduction de dimension pour la visualisation de données, permettant de représenter un ensemble de points d'un espace à grande dimension dans un espace de deux ou trois dimensions, les données peuvent ensuite être visualisées avec un nuage de points. L'algorithme t-SNE tente de trouver une configuration optimale (qui est la projection t-SNE évoquée avant, en anglais « embedding ») selon un critère de théorie de l'information pour respecter les proximités entre points.

L'algorithme t-SNE se base sur une interprétation probabiliste des proximités. Une distribution de probabilité est définie sur les paires de points de l'espace d'origine de telle sorte que des points proches l'un de l'autre ont une forte probabilité d'être choisis tandis que des points éloignés ont une faible probabilité d'être sélectionnés. Une distribution de probabilité est également définie de la même manière pour l'espace de projection. L'algorithme t-SNE consiste à faire concorder les deux densités de probabilité, en minimisant la divergence de Kullback-Leibler entre les deux distributions par rapport à l'emplacement des points sur la carte.

L'algorithme t-SNE peut être mis en œuvre aussi bien au niveau particule (une particule cible 11a-11f par rapport aux particules individuelles pour lesquelles on dispose dans la base d'apprentissage d'une carte) qu'au niveau champ (pour tout l'échantillon 12 - cas d'une pluralité d'images d'entrée représentant une pluralité de particules 11a-11f), en particulier dans le cas d'images seules plutôt que de stacks.

A noter que la projection t-SNE peut être faite de manière efficace grâce notamment à des implémentations par exemple sous python de sorte à pouvoir être réalisée en temps réel. On peut également pour accélérer les calculs et réduire l'empreinte mémoire, passer par une première étape de réduction linéaire de la dimensionnalité (par exemple l'ACP - Analyse aux Composantes Principales) avant de calculer la projections t-SNE de la base d'apprentissage et de l'image d'entrée considérée. Dans ce cas on peut stocker en mémoire les projections par ACP de la base d'apprentissage, il n'y a plus qu'à terminer la projection avec la carte de caractéristiques de l'image d'entrée considérée.

*Classification*

Dans une étape (c), ladite image d'entrée est classifiée de manière non-supervisée en fonction de la carte de caractéristiques présentant un nombre de variables réduit, i.e. sa projection t-SNE.

On comprend que toute technique permettant une analyse descriptive de l'espace de projection t-SNE pourra être utilisée. En effet, toute l'information de la base d'apprentissage y est déjà contenue de sorte qu'il suffit de regarder la configuration spatiale de cet espace de projection pour conclure sur la classification.

Le plus simple est d'utiliser la méthode des k plus proches voisins (k-nearest neighbors, k-NN).

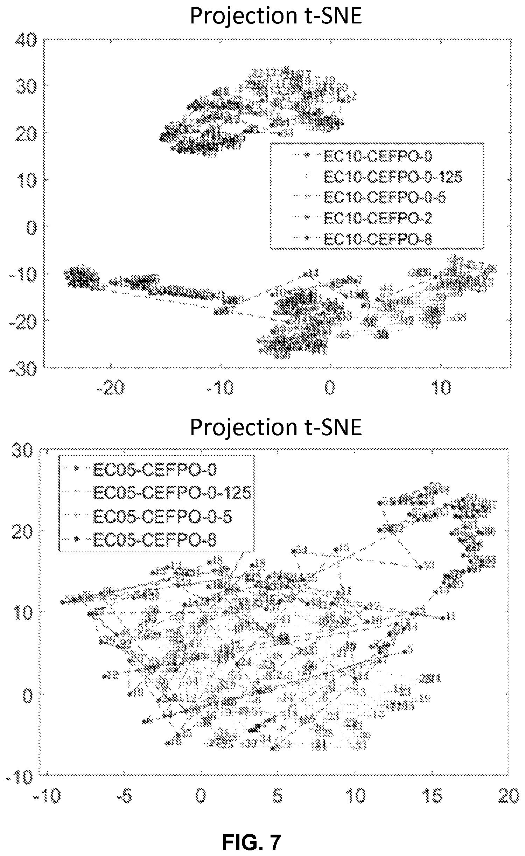

L'idée est de regarder les points voisins du point correspondant à la carte de caractéristiques de la ou les images d'entrée considérées, et de regarder leur classification. Par exemple, si les points voisins sont classés « pas de division », on peut supposer que l'image d'entrée considérée doit être classés « pas de division ». A noter qu'on peut éventuellement limiter les voisins considérés, par exemple ne fonction de la souche, de l'antibiotique, etc. La **Figure 7** montre deux exemples d'embeddings t-SNE obtenus pour une souche d'E. Coli pour diverses concentrations de cefpodoxime. Dans l'exemple du haut on voit clairement deux blocs, permettant de montrer visuellement l'existence d'une concentration minimale inhibitrice (minimum inhibitory concentration (MIC)) à partir de laquelle on a un impact sur la morphologie et donc la division cellulaire. On pourra classer un vecteur tombant à proximité de la partie haute comme « division » et un vecteur tombant à proximité de la partie basse comme « pas de division ». Dans l'exemple du bas on voit qu'uniquement la concentration la plus élevée se détache (et semble donc avoir un effet antibiotique).

*Produit programme d'ordinateur*

Selon un deuxième et un troisième aspects, l'invention concerne un produit programme d'ordinateur comprenant des instructions de code pour l'exécution (en particulier sur les moyens de traitement de données 3, 20 du serveur 1 et/ou du client 2) d'un procédé de classification d'au moins une image d'entrée représentant une particule cible 11a-11f dans un échantillon 12, ainsi que des moyens de stockage lisibles par un équipement informatique (une mémoire 4, 21 du serveur 1 et/ou du client 2) sur lequel on trouve ce produit programme d'ordinateur.

**Revendications**

1. Procédé de classification d'au moins une image d'entrée représentant une particule cible (11a-11f) dans un échantillon (12), le procédé étant **caractérisé en ce qu'**il comprend la mise en œuvre, par des moyens de traitement de données (20) d'un client (2), d'étapes de :

   (b) Extraction d'une carte de caractéristiques de ladite particule cible (11a-11f) à partir de l'image d'entrée au moyen d'un réseau de neurones à convolution pré-entraîné sur une base d'images publique ;
   (c) réduction du nombre de variables de la carte de caractéristiques extraite, au moyen de l'algorithme t-SNE ;
   (d) Classification non-supervisée de ladite image d'entrée en fonction de ladite carte de caractéristiques présentant un nombre de variables réduit.

2. Procédé selon la revendication 1, dans lequel les particules (11a-11f) sont représentées d'une manière homogène dans l'image d'entrée et dans chaque image élémentaire, en particulier centrées et alignées selon une direction prédéterminée.

3. Procédé selon la revendication 2, comprenant une étape (a) d'extraction de ladite image d'entrée d'une image globale de l'échantillon, de sorte à représenter ladite particule cible (11a-11f) de ladite manière homogène

4. Procédé selon la revendication 3, dans lequel l'étape (a) comprend la segmentation de ladite image globale de sorte à détecter ladite particule cible (11a-11f) dans l'échantillon (12), puis le recadrage de l'image d'entrée sur ladite particule cible (11a-11f) détectée.

5. Procédé selon l'une des revendications 3 et 4, dans lequel l'étape (a) comprend l'obtention de ladite image globale à partir d'une image en intensité de l'échantillon (12) acquise par un dispositif d'observation (10).

6. Procédé selon l'une des revendications 1 à 5, dans lequel ladite carte de caractéristiques est un vecteur de coefficients numériques chacun associés à une image élémentaire d'un ensemble d'images élémentaire chacune représentant une particule de référence, l'étape (a) comprenant la détermination des coefficients numériques tels qu'une combinaison linéaire desdites images élémentaires pondérées par lesdits coefficients approxime la représentation de ladite particule cible (11a-11f) dans l'image d'entrée.

7. Procédé selon l'une des revendications 1 à 6, dans lequel l'étape (c) comprend, au moyen dudit algorithme t-SNE, la définition d'un espace de projection de chaque carte de caractéristiques d'une base d'apprentissage de cartes de caractéristiques déjà classifiées de particules (11a-11f) dans un échantillon (12) et de la carte de caractéristiques extraite, ladite carte de caractéristiques présentant un nombre de variables réduit étant le résultat de la projection de la carte de caractéristiques extraite dans ledit espace de projection.

8. Procédé selon la revendication 7, dans lequel l'étape (d) comprend la mise en œuvre d'un algorithme des k plus proches voisins dans ledit espace de projection.

9. Procédé selon l'une des revendications 1 à 8, de classification d'une séquence d'images d'entrée représentant ladite particule cible (11a-11f) dans un échantillon (12) au cours du temps, dans lequel l'étape (b) comprend la concaténation des cartes de caractéristiques extraites pour chaque image d'entrée de ladite séquence.

10. Système de classification d'au moins une image d'entrée représentant une particule cible (11a-11f) dans un échantillon (12) comprenant au moins un client (2) comprenant des moyens de traitement de données (20), **caractérisé en ce que** lesdits moyens de traitement de données (20) sont configurés pour implémenter :

    - l'extraction d'une carte de caractéristiques de ladite particule cible (11a-11f) par analyse de l'au moins une image d'entrée au moyen d'un réseau de neurones à convolution pré-entraîné sur une base d'images publique ;
    - la réduction du nombre de variables de la carte de caractéristiques au moyen de l'algorithme t-SNE ;
    - la classification non-supervisée de ladite image d'entrée en fonction de ladite carte de caractéristiques présentant un nombre de variables réduit.

11. Système selon la revendication 10, comprenant en outre un dispositif d'observation (10) de ladite particule cible (11a-11f) dans l'échantillon (12).

12. Produit programme d'ordinateur comprenant des instructions de code pour l'exécution d'un procédé selon l'une des revendications 1 à 9 de de classification d'au moins une image d'entrée représentant une particule cible (11a-11f) dans un échantillon (12), lorsque ledit programme est exécuté sur un ordinateur.

13. Moyen de stockage lisible par un équipement informatique sur lequel un produit programme d'ordinateur comprend des instructions de code pour l'exécution d'un procédé selon l'une des revendications 1 à 9 de classification d'au moins une image d'entrée représentant une particule cible (11a-11f) dans un échantillon (12).

**Patentansprüche**

1. Verfahren zur Klassifikation mindestens eines Eingabebilds, das ein Zielteilchen (11a-11f) in einer Probe (12) darstellt, wobei das Verfahren **dadurch gekennzeichnet ist, dass** es die Durchführung, durch Datenverarbeitungseinrichtungen (20) eines Clients (2) von Schritten umfasst zur:

    (b) Extraktion einer Merkmalskarte des Zielteilchens (11a-11f) ausgehend von dem Eingabebild mittels eines neuronalen Faltungsnetzes, das mit einer öffentlichen Bilddatenbank vortrainiert wurde;
    (c) Reduktion der Anzahl von Variablen der extrahierten Merkmalskarte mittels des t-SNE-Algorithmus;
    (d) Nicht überwachten Klassifikation des Eingabebilds in Abhängigkeit von der eine reduzierte Anzahl von Variablen aufweisenden Merkmalskarte.

2. Verfahren nach Anspruch 1, wobei die Teilchen (11a-11f) in dem Eingabebild auf homogene Weise dargestellt sind und in jedem elementaren Bild insbesondere zentriert und entlang einer vorbestimmten Richtung ausgerichtet sind.

3. Verfahren nach Anspruch 2, umfassend einen Schritt (a) der Extraktion des Eingangsbilds aus einem Gesamtbild der Probe, so dass das Zielteilchen (11a-11f) auf homogene Weise dargestellt wird

4. Verfahren nach Anspruch 3, wobei der Schritt (a) das Segmentieren des Gesamtbilds, so dass das Zielteilchen (11a-11f) in der Probe (12) detektiert wird, dann das Zuschneiden des Eingangsbilds auf das detektierte Zielteilchen (11a-11f) umfasst.

5. Verfahren nach einem der Ansprüche 3 und 4, wobei der Schritt (a) das Erhalten des Gesamtbilds ausgehend von einem von einer Betrachtungsvorrichtung (10) erfassten Intensitätsbild der Probe (12) umfasst.

6. Verfahren nach einem der Ansprüche 1 bis 5, wobei die Merkmalskarte ein Vektor digitaler Koeffizienten ist, von denen jeder einem elementaren Bild einer Menge von elementaren Bildern zugeordnet ist, von denen jedes ein Referenzteilchen darstellt, wobei der Schritt (a) das Bestimmen der digitalen Koeffizienten derart umfasst, dass eine lineare Kombination der durch die Koeffizienten gewichteten elementaren Bilder die Darstellung des Zielteilchens (11a-11f) in dem Eingabebild approximiert.

7. Verfahren nach einem der Ansprüche 1 bis 6, wobei der Schritt (c), mittels des t-SNE-Algorithmus, das Definieren eines Projektionsraums jeder Merkmalskarte einer Lerndatenbank mit bereits klassifizierten Merkmalskarten von Teilchen (11a-11f) in einer Probe (12) und der extrahierten Merkmalskarte umfasst, wobei die eine reduzierte Anzahl von Variablen aufweisende Merkmalskarte das Ergebnis der Projektion der extrahierten Merkmalskarte in dem Projektionsraum ist.

8. Verfahren nach Anspruch 7, wobei der Schritt (d) die Durchführung eines Algorithmus der k nächsten Nachbarn in dem Projektionsraum umfasst.

9. Verfahren nach einem der Ansprüche 1 bis 8 zur Klassifikation einer Sequenz von Eingabebildern, die das Zielteilchen (11a-11f) in einer Probe (12) im Zeitverlauf darstellt, wobei der Schritt (b) das Verketten der extrahierten Merkmalskarten für jedes Eingabebild der Sequenz umfasst.

10. System zur Klassifikation mindestens eines Eingabebilds, das ein Zielteilchen (11a-11f) in einer Probe (12) darstellt, umfassend mindestens einen Datenverarbeitungseinrichtungen (20) umfassenden Client (2), **dadurch gekennzeichnet, dass** die Datenverarbeitungseinrichtungen (20) ausgestaltet sind zum Implementieren:

- der Extraktion einer Merkmalskarte des Zielteilchens (11a-11f) durch Analysieren des mindestens einen Eingabebilds mittels eines neuronalen Faltungsnetzes, das mit einer öffentlichen Bilddatenbank vortrainiert wurde;
- der Reduktion der Anzahl von Variablen der Merkmalskarte mittels des t-SNE-Algorithmus;

- der nicht überwachten Klassifikation des Eingabebilds in Abhängigkeit von der eine reduzierte Anzahl von Variablen aufweisenden Merkmalskarte.

11. System nach Anspruch 10, umfassend ferner eine Betrachtungsvorrichtung (10) zum Betrachten des Zielteilchens (11a-11f) in der Probe (12).

12. Computerprogrammprodukt, das Codeanweisungen umfasst, die bei der Ausführung des Programms auf einem Computer ein Verfahren nach einem der Ansprüche 1 bis 9 zur Klassifikation mindestens eines Eingabebilds, das ein Zielteilchen (11a-11f) in einer Probe (12) darstellt, ausführen.

13. Speichermedium, das von einer informationstechnischen Vorrichtung lesbar ist und auf dem ein Computerprogrammprodukt Codeanweisungen zur Ausführung eines Verfahrens nach einem der Ansprüche 1 bis 9 zur Klassifikation mindestens eines Eingabebilds, das ein Zielteilchen (11a-11f) in einer Probe (12) darstellt, umfasst.

**Claims**

1. A method for classifying at least one input image representing a target particle (11a-11f) in a sample (12), the method being **characterized in that** it comprises implementation, by data-processing means (20) of a client (2), of steps of:

(b) extraction of a feature map of said target particle (11a-11f) from the input image by means of a convolutional neural network trained beforehand on a public image database;
(c) reduction of the number of variables of the extracted feature map, by means of the t-SNE algorithm;
(d) unsupervised classification of said input image depending on said feature map having a reduced number of variables.

2. The method as claimed in claim 1, wherein the particles (11a-11f) are represented in a uniform manner in the input image and in each elementary image, and in particular centered on and aligned in a predetermined direction.

3. The method as claimed in claim 2, comprising a step (a) of extracting said input image from an overall image of the sample, so as to represent said target particle (11a-11f) in said uniform manner.

4. The method as claimed in claim 3, wherein step (a) comprises segmentation of said overall image so as to detect said target particle (11a-11f) in the sample (12), then cropping of the input image to said detected target particle (11a-11f).

5. The method as claimed in one of claims 3 and 4, wherein step (a) comprises obtaining said overall image from an intensity image of the sample (12), said image being acquired by an observing device (10).

6. The method as claimed in one of claims 1 to 5, wherein said feature map is a vector of numerical coefficients each associated with one elementary image of a set of elementary images each representing a reference particle, step (a) comprising determination of numerical coefficients such that a linear combination of said elementary images weighted by said coefficients approximates the representation of said target particle (11a-11f) in the input image.

7. The method as claimed in one of claims 1 to 6, wherein step (c) comprises, by means of said t-SNE algorithm, definition of an embedding space for each feature map of a training database of already classified feature maps of particles (11a-11f) in a sample (12) and for the extracted feature map, said feature map having a reduced number of variables being the result of embedding the extracted feature map into said embedding space.

8. The method as claimed in claim 7, wherein step (d) comprises implementation of a k-nearest neighbor algorithm in said embedding space.

9. The method as claimed in one of claims 1 to 8, for classifying a sequence of input images representing said target particle (11a-11f) in a sample (12) over time, wherein step (b) comprises concatenation of the extracted feature maps of each input image of said sequence.

10. A system for classifying at least one input image representing a target particle (11a-11f) in a sample (12) comprising at least one client (2) comprising data-processing means (20), **characterized in that** said data-processing means (20) are configured to implement:

   - extraction of a feature map of said target particle (11a-11f) via analysis of the at least one input image by means of a convolutional neural network trained beforehand on a public image database;
   - reduction of the number of variables of the feature map, by means of the t-SNE algorithm;
   - unsupervised classification of said input image depending on said feature map having a reduced number of variables.

11. The system as claimed in claim 10, further comprising a device (10) for observing said target particle (11a-11f) in the sample (12).

12. A computer program product comprising code instructions for executing a method as claimed in one of claims 1 to 9 for classifying at least one input image representing a target particle (11a-11f) in a sample (12), when said program is executed on a computer.

13. A storage medium readable by a piece of computer equipment, on which a computer program product comprises code instructions for executing a method as claimed in one of claims 1 to 9 for classifying at least one input image representing a target particle (11a-11f) in a sample (12).

**FIG. 1**

**FIG. 2**

**FIG. 3a**

**FIG. 3b**

Base de données d'apprentissage

(a0) Apprentissage espace de projection

(a) Acquisition image(s) d'entrée

(b) Extraction caractéristiques

(c) Projection t-SNE

(d) Classification

**FIG. 4**

FIG. 5a

Image globale au temps T1

Vignettes

Sparse code
(vecteur de
coefficients)

Histogramme
cumulatif au
temps T1

Temps (min)

Profil d'activation
(avec les coefficients
normalisés)

**FIG. 5b**

224×224×3  224×224×64

112×112×128

56×56×256

28×28×512

14×14×512

7×7×512

1×1×4096   1×1×1000

convolution+ReLU
max pooling
fully connected+ReLU
softmax

Extraction de caractéristique

FIG. 6

FIG. 7

# EP 4 232 948 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2603601 A

- WO 2017207184 A

**Littérature non-brevet citée dans la description**

- **MYUNG K.KIM**. Principles and techniques of digital holographie microscopy. *SPIE Reviews*, January 2010, vol. 1 (I)